# EUROPEAN PATENT APPLICATION

(11) **EP 0 952 435 A1**
(43) Date of publication of application: **27.10.1999**
(21) Application number: 99201047.0
(22) Date of filing: 01.04.1999
(51) Int. Cl.: G01G 19/08, A01B 59/06, A01C 17/00

(54) **Device for weighing material, such as fertilizer**

(30) Priority: 22.04.1998 NL 1008957
(71) Applicant: MAASLAND N.V., 3155 PD Maasland (NL)
(72) Inventor: van der Waal, Pieter Jacob, 3145 LB Maassluis (NL); Bom, Cornelis Johannes Gerardus, 3181 VC Rozenburg (NL)
(74) Representative: Corten, Maurice Jean F.M.

(57) **Abstract**

The invention relates to an implement for weighing material, such as fertilizer, for example, which implement comprises a first frame (7) and a second frame (8), a weight measuring device (10) being provided between said first and second frame. The first and second frame are located in a substantially horizontal plane, while between the first and second frame there are provided fixing means (20) preventing the two frames from shifting relative to each other, while the fixing means (20) allow an other movement than shifting in that they are provided with a hinging construction or in that they are capable of bending with a low resistance.

## Description

The invention relates to an implement for weighing material, such as fertilizer, for example, which implement comprises a first frame and a second frame, a weight measuring device being provided between said first and second frame.

Such an implement is known.

In the known implement the two frame parts are rigidly interconnected via a load cell. Such a construction usually requires frame parts and a load cell of a heavy construction. This requirement serves to prevent the load cell and the frame parts from bending when the implement is operating at an angle relative to a horizontal plane, such a bending resulting in the incapability of the load cell to establish the correct weight.

The invention aims at providing an implement in which the frames and the load cell can be designed as relatively light ones and in which the load cell and the frames do not bend, or only bend to a small extent, when the implement is positioned at an angle relative to the horizontal.

In accordance with the invention, this is achieved in that the first and second frame are located in a substantially horizontal plane and in that between the first and second frame there are provided fixing means preventing the two frames from shifting relative to each other, while the fixing means allow an other movement than shifting in that they are provided with a hinging construction or in that they are capable of bending with a low resistance. As a result of the fact that with the aid of the fixing means all the shifting forces are absorbed, the frames and the weight measuring device can be designed as relatively light ones.

According to an inventive feature, the fixing means comprise a fixing element of which one end is fitted to the first frame and the other end to the second frame.

In accordance with another inventive feature, the fixing means comprise at least two fixing elements enclosing an angle α with each other. According to a further aspect of the invention, the angle α is greater than 30°. According to again another inventive feature, the fixing elements are disposed near the front side and/or the rear side and/or near the longitudinal centre line of the frames. In a preferred embodiment of the invention, two fixing elements are provided near the front side and the rear side of the implement between the first and second frame and two fixing elements are provided near the longitudinal centre line through the frames. For the purpose of minimizing the influence of the fixing means on the weight measurement, according to an inventive feature, the fixing means are located in one plane or in several planes that are situated at a small distance from each other. In a preferred embodiment of the invention the fixing means are located in the same plane as the weight measuring device. In this manner the fixing means are prevented from exerting moment forces on the weight measuring device when the implement is brought at an angle relative to a horizontal plane. According to a further inventive feature, the maximum distance between the two planes that are most remote from each other is smaller than 15 cm.

According to again another inventive feature, the fixing elements are constituted by thin, preferably long, bars or strips. As a result of the fact that the bars are thin and long, the first and second frame can move vertically relative to each other without encountering too much resistance from the fixing elements. In this manner bending of the fixing elements is prevented from too largely affecting the weight measurement.

For the purpose of having the first and second frame move vertically relative to each other with a still smaller resistance, according to a further inventive feature the fixing means comprise cables or steel wires.

In order to be able to fix the first and second frame exactly relative to each other, according to a further inventive feature the fixing device comprises prestressing means with the aid of which the first and second frame are fixed relative to each other while being prestressed. According to again another inventive feature the prestressing means are adjustable.

According to an aspect of the invention, the weight measuring device comprises at least one load cell. According to again another inventive feature, the load cell is provided with strain gauges. In a preferred embodiment of the invention the implement comprises three load cells. According to an inventive feature, the load cells are disposed on the first or the second frame. According to again another aspect of the invention, on the first or the second frame there are disposed retaining means between which the weight measuring device is retained. In a preferred embodiment of the invention the retaining means comprise two supported balls or globes between which the load cell is located. The application of balls or globes has the advantage that the load cell is loaded by the balls or globes with a point load, so that an accurate weight measurement can be effected. According to again another inventive feature, the retaining means comprise adjusting means with the aid of which it is possible to adjust the force with which the weight measuring device is retained.

In accordance with the invention, the implement comprises angle measuring means with the aid of which the angle assumed by the weight measuring device relative to a reference plane is determined. According to a further inventive feature, the angle measuring means comprise a calculation unit which, on the basis of the signals supplied by the angle measuring means, calculates the exact weight or the decrease in weight of material bearing on the frames, independently of the angle assumed by the frames relative to the reference plane.

In an embodiment of the invention the implement is movable and preferably provided with wheels. According to an inventive feature, on the first or the second frame there is disposed a hopper in which liquid, solid, granular or pulverulent material can be stored. In an embodiment of the invention, on the first or the second frame there is provided an implement for spreading granular and/or pulverulent material, such as a fertilizer spreader or a sowing machine, for example. Consequently, by means of the implement it is possible to determine continually the weight or the decrease in weight of the material to be spread. According to again another inventive feature, the implement is provided with a computer or a calculation unit comprising measuring and/or controlling means which, on the basis of the actual decrease in weight determined by the weight measurement and the desired decrease in weight, activate a metering device so that the desired decrease in weight is obtained.

The invention will now be set out in further detail with reference to the accompanying drawings in which
Figure 1 is a side view of an implement for weighing material;
Figure 2 is a plan view of the first and second frame, including the weight measuring device and the fixing means;
Figure 3 is a side view of the implement according to Figure 1, in which the weight measuring device is visible, and
Figure 4 is a rear view of part of the implement.

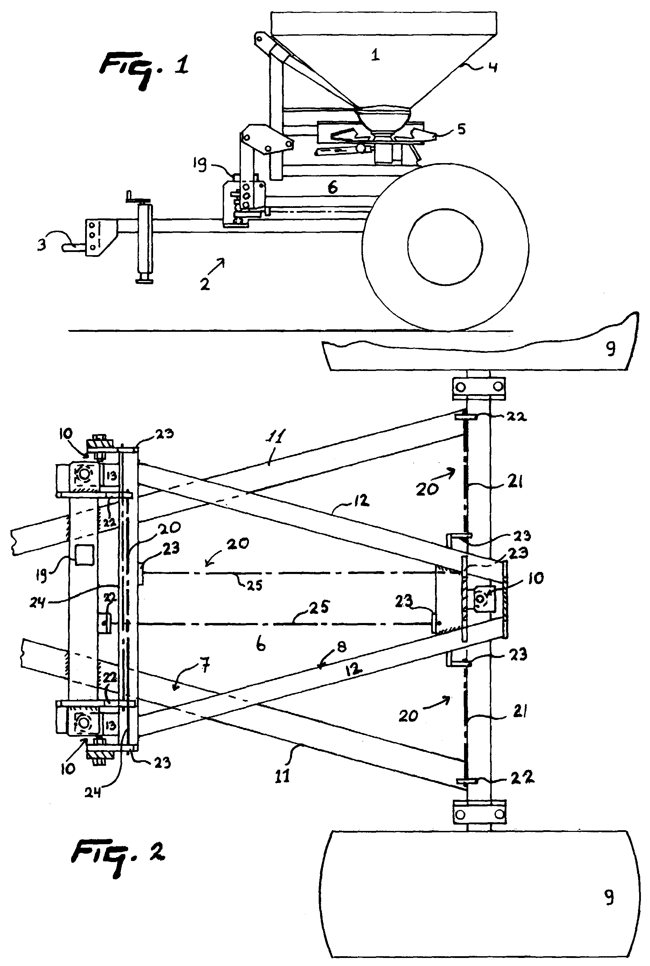

Figure 1 shows a centrifugal fertilizer spreader 1 which is disposed on a carrier 2 that is provided with coupling means 3 with the aid of which it can be coupled to a non-shown tractor. The fertilizer spreader 1 comprises a hopper 4 in which the material to be spread, such as fertilizer, for example, can be stored. The fertilizer spreader 1 is further provided with two drivable spreader discs 5 by means of which the material present in the hopper 4 can be spread. The fertilizer spreader 1 is further provided with a (non-shown) metering system with the aid of which the material to be spread can be dosed. The fertilizer spreader 1 further comprises a (non-shown) calculation unit by means of which the metering mechanism can be automatically activated.

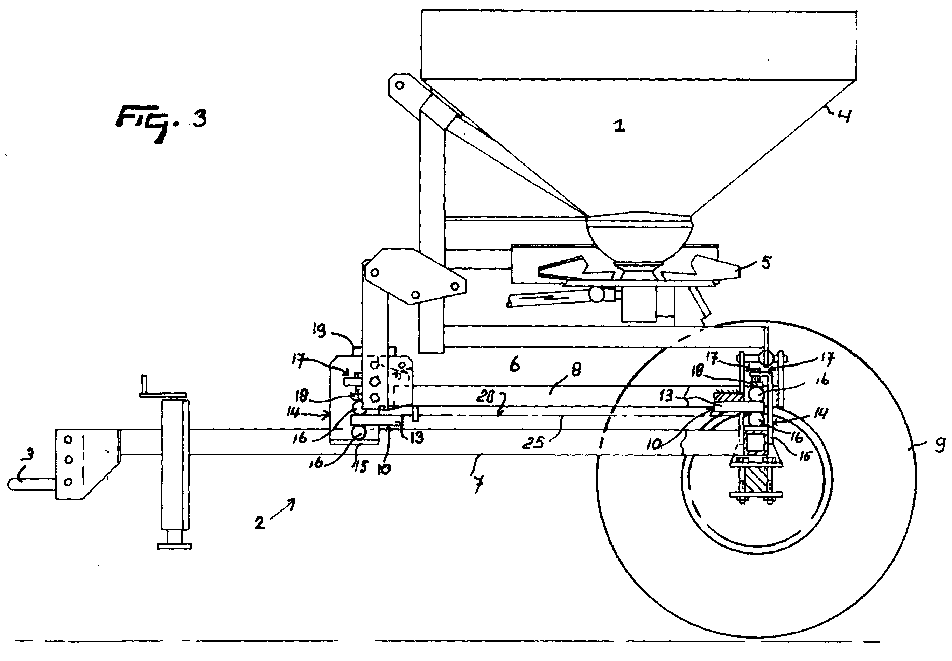

The carrier 2 is further provided with an implement 6 for weighing material. As shown in Figures 2 and 3, the implement 6 comprises a first frame 7 and a second frame 8. The first frame 7 constitutes part of the chassis of the carrier 2 and comprises two wheels 9. Between the first frame 7 and the second frame 8 there is provided a weight measuring device 10. The first frame 7 comprises a triangular first framework 11 that is made of frame beams. As shown in Figure 2, the top of the first triangular framework 11 is orientated in the direction of travel of the carrier 2. The second frame 8 comprises a second triangular framework 12 whose top is orientated in the direction opposite to that of the first triangular framework 11. The second frame 8 is located above the first frame 7.

Near the ends of its base the second triangular framework 12 is provided with load cells 13 constituting part of the weight measuring device 10. The load cells 13 are provided with (non-shown) strain gauges. Each of the load cells 13 is retained with the aid of retaining means 14 which are disposed on the first triangular framework 11. The retaining means 14 each comprise a U-shaped bracket 15 that is fitted to the frame beams of the first frame 7. Each of the three retaining means 14 further comprises two balls 16, one of which being located at the upper side of the load cell 13 and one at the lower side thereof. Each of the retaining means 14 is further provided with adjusting means 17 with the aid of which the force can be adjusted with which the load cell 13 is retained between the U-shaped bracket 15 and the ball 16. In the present embodiment the adjusting means 17 are constituted by a bolt 18 whose head bears on the upper ball 16 and is screwed into the upper part of the U-shaped bracket 15.

On the first frame 7 there are provided angle measuring means 19 with the aid of which it is possible to determine the angle assumed by the weight measuring device 10 relative to a reference plane.

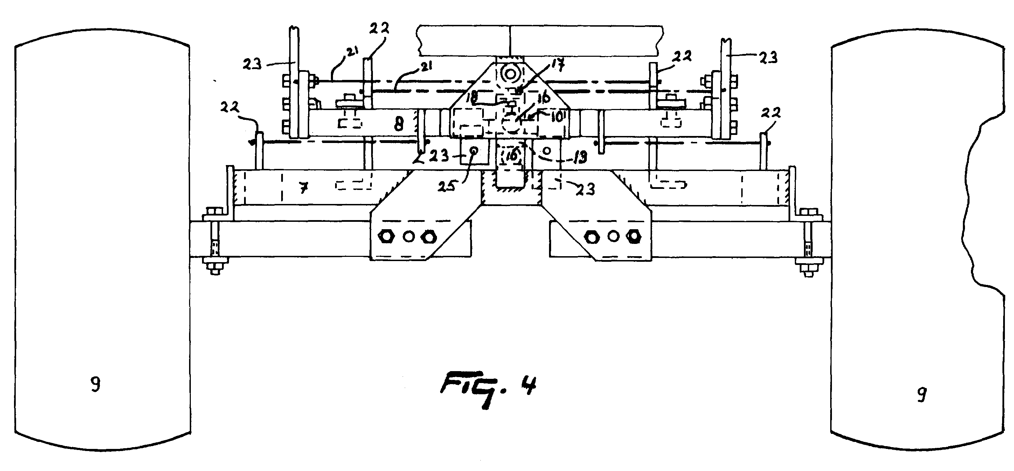

The first frame 7 and the second frame 8 are fixed by fixing means 20 against shifting relative to each other. In the present embodiment the fixing means 20 comprise six fixing elements. The fixing elements are constituted by thin bars both ends of which are threaded. However, it will be obvious that the fixing elements may also be constituted by cables or wires. As shown in Figures 3 and 4, the implement comprises a first pair of bars 21 which is disposed near the rear side of the implement. The bars 21 are connected with one end to a first lug 22 that is fitted to the first frame 7, and with the other end to a second lug 23 that is fitted to the second frame 8. Near the front side of the implement between the two frames there is provided a second pair of bars 24 of which one end is also connected to the first frame 7 via a first lug 22 and the other end is connected to the second frame 8 via a second lug 23. Near the middle of the implement between the two frames there is disposed a third pair of bars 25 which is again connected to the first frame 7 via a first lug 22 and to the second frame 8 via a second lug 23. The fixing means 20 further comprise (non-shown) prestressing means with the aid of which the two frames can be fixed relative to each other while being prestressed in an adjustable manner. In the present embodiment the prestressing means are constituted by (non-shown) nuts that are screwed to the bars in the vicinity of the first and second lugs 22, 23.

The implement operates as follows.

After the farmer has inputted into a (non-shown) computer the desired quantity of material to be spread per unit of area, as well as the working width and the driving speed of the implement, the computer calculates the desired decrease in weight per unit of time. By means of the weight measuring device 10 there can be checked whether the desired decrease in weight per unit of time equals the decrease in weight realized per unit of time. When it appears that the decrease in weight realized per unit of time differs from the desired decrease in weight per unit of time, a signal is supplied by the computer to the (non-shown) metering device, in order that the desired decrease in weight per unit of time equals the decrease in weight realized per unit of time. When the implement operates at an angle relative to a horizontal plane, the weight measurement is corrected with the aid of the angle measuring means 19, in such a manner that the actual weight and thus the decrease in weight realized per unit of time can be calculated.

## Claims

1. An implement for weighing material, such as fertilizer, for example, which implement comprises a first frame (7) and a second frame (8), a weight measuring device (10) being provided between said first and second frame, characterized in that the first and second frame are located in a substantially horizontal plane and in that between the first and second frame there are provided fixing means (20) preventing the two frames from shifting relative to each other, while the fixing means (20) allow an other movement than shifting in that they are provided with a hinging construction or in that they are capable of bending with a low resistance.

2. An implement as claimed in claim 1, characterized in that the fixing means (20) comprise a fixing element (21; 24; 25) of which one end is fitted to the first frame (7) and the other end to the second frame (8).

3. An implement as claimed in claim 2, characterized in that the fixing means (20) comprise at least two fixing elements (21; 24; 25) enclosing an angle α with each other.

4. An implement as claimed in claim 3, characterized in that the angle α is greater than 30°.

5. An implement as claimed in any one of claims 2 - 4, characterized in that fixing elements (21; 24; 25) are disposed near the front side and/or the rear side and/or near the longitudinal centre line of the frames (7, 8).

6. An implement as claimed in claim 5, characterized in that two fixing elements (21, 24) are provided near the rear side and the front side of the implement between the frames (7, 8) and two fixing elements (25) are provided near the longitudinal centre line through the frames.

7. An implement as claimed in any one of the preceding claims, characterized in that the fixing means (20) are located in one plane or in several planes that are situated at a small distance from each other.

8. An implement as claimed in claim 7, characterized in that the distance between the two planes that are most remote from each other is smaller than 15 cm.

9. An implement as claimed in any one of the preceding claims, characterized in that the fixing elements (21, 24, 25) are constituted by thin, preferably long, bars or strips.

10. An implement as claimed in any one of the preceding claims, characterized in that the fixing elements (21, 24, 25) are constituted by cables or steel wires.

11. An implement as claimed in any one of the preceding claims, characterized in that the fixing means (20) comprise prestressing means with the aid of which the first and second frame (7, 8) can be fixed relative to each other while being prestressed.

12. An implement as claimed in claim 11, characterized in that the prestressing means are adjustable.

13. An implement as claimed in any one of the preceding claims, characterized in that the weight measuring device (10) comprises at least one load cell (13).

14. An implement as claimed in claim 13, characterized in that the load cell (13) is provided with strain gauges.

15. An implement as claimed in claim 13 or 14, characterized in that the implement comprises three load cells (13).

16. An implement as claimed in any one of claims 13 - 15, characterized in that the load cell (13) or the load cells (13) are disposed on the first or the second frame (7, 8).

17. An implement as claimed in any one of the preceding claims, characterized in that on the first or the second frame (7, 8) there are disposed retaining means (14) between which the weight measuring device (10) is retained.

18. An implement as claimed in claim 17, characterized in that the retaining means (14) comprise two supported balls or globes (16) between which the load cell (13) is located.

19. An implement as claimed in claim 17 or 18, characterized in that the retaining means (14) comprise adjusting means with the aid of which it is possible to adjust the force with which the weight measuring device (10) is retained.

20. An implement as claimed in any one of the preceding claims, characterized in that the implement comprises angle measuring means (19) with the aid of which the angle assumed by the weight measuring device (10) relative to a reference plane can be determined.

21. An implement as claimed in claim 20, characterized in that the angle measuring means (19) comprise a calculation unit which, on the basis of the signals supplied by the angle measuring means (19), calculates the exact weight or the decrease in weight of material bearing on the frames (7, 8), independently of the angle assumed by the frames relative to the reference plane.

22. An implement as claimed in any one of the preceding claims, characterized in that the implement is movable and preferably provided with wheels (9).

23. An implement as claimed in any one of the preceding claims, characterized in that on the first or the second frame (7, 8) there is disposed a hopper (4) in which liquid, solid, granular or pulverulent material can be stored.

24. An implement as claimed in any one of the preceding claims, characterized in that on the first or the second frame (7, 8) there is provided an implement for spreading granular and/or pulverulent material, such as a fertilizer spreader (1) or a sowing machine, for example.

25. An implement as claimed in any one of the preceding claims, characterized in that the implement is provided with a computer or a calculation unit comprising measuring and/or controlling means which, on the basis of the actual decrease in weight determined by the weight measurement and the desired decrease in weight, activate a metering device so that the desired decrease in weight is obtained.
